# EUROPEAN PATENT SPECIFICATION

(11) **EP 3 970 946 B1**
(45) Date of publication and mention of the grant of the patent: **01.11.2023**
(21) Application number: 21197228.6
(22) Date of filing: 16.09.2021
(51) Int. Cl.: B29C 49/58, F16K 3/26, B29C 49/78, B29C 49/42, B29C 49/12, B29C 49/18

(54) **FLUID FLOW CONTROL DEVICE**
FLUIDFLUSSSTEUERUNGSVORRICHTUNG
DISPOSITIF DE COMMANDE D'ÉCOULEMENT DE FLUIDE

(30) Priority: 17.09.2020 DE 102020124284
(43) Date of publication of application: 23.03.2022
(73) Proprietor: Norgren AG, 8370 Sirnach (CH)
(72) Inventor: Schmid, Daniel, 8370 Sirnach (CH)
(74) Representative: Whitfield, Jack Stephen

(56) References cited:
- EP-B1- 2 350 506
- EP-B1- 2 977 184
- DE-A1- 2 033 058
- JP-A- 2000 033 644
- KR-A- 20190 041 222
- KR-B1- 101 228 868
- US-A- 4 790 741
- US-A1- 2014 066 861
- US-B2- 8 197 239
- US-B2- 8 262 384
- US-B2- 9 976 656

## Description

The Application is related to the field of fluid flow control, and more particularly, to a throttle.

Blow-moulding is a process for moulding a preform part into a desired product. The preform is in the general shape of a tube with an opening at one end for the introduction of pressurized gas, typically air; however, other gases may be used. One specific type of blow-moulding is stretch blow-moulding (SBM). In typical SBM applications, both low and high-pressure gas is used to expand the preform into a mould cavity. The mould cavity comprises the outer shape of the desired product. SBM can be used in a wide variety of applications; however, one of the most widely used applications is in the production of Polyethylene terephthalate (PET) products, such as drinking bottles. US8262384 discloses a blow moulding apparatus having a longitudinal blow piston and a blow nozzle, with a control block and valve arrangement.

Document US 8 262 384 B2 discloses a blow moulding device for expanding a thermoplastic form into a hollow thermoplastic container the blow moulding device, comprising - at least one valve connectable to at least one blowing fluid source for injecting a blow fluid from the blowing fluid source into the thermoplastic form, - a flow rate controlling throttle connected in series to the at least one valve, wherein the flow rate controlling throttle reduces the flow rate of the blow fluid to a predefined flow rate.

US3354911 discloses a device for maintaining O-rings and similar annular seals in position between the housings of spool valves. US9976656 discloses a control valve for a camshaft adjuster with a hollow cylindrical control pistol.

Typically, the SBM process uses a low-pressure fluid supply along with a stretch rod that is inserted into the preform to stretch the preform in a longitudinal direction and then uses a high-pressure fluid supply to expand the preform radially outward into the mould cavity. The low-pressure fluid supply along with the stretch rod is typically referred to as a pre-blowing phase of the moulding cycle. The high-pressure fluid supply that expands the preform into the mould cavity is typically referred to as the blowing phase of the moulding cycle. The low-pressure and high-pressure fluid supplies can be controlled using blow-mould valves, which are usually arranged in a blow head around the stretch rod to reduce dead volumes. The resulting product is generally hollow with an exterior shape conforming to the shape of the mould cavity. The gas in the preform is then exhausted through one or more exhaust valves. This process is repeated during each blow-moulding cycle.

One of the more critical steps in the moulding process occurs during the pre-blowing phase. During this phase, a pressure up to approximately 12 bar (174 psi) is provided to the preform while the stretch rod simultaneously extends the preform in a longitudinal direction. During the pre-blowing phase, there is an attempt to substantially uniformly distribute the material of the preform along the longitudinal length prior to expansion of the preform against the mould cavity. If the perform experiences a sudden jump in pressure during the pre-blowing phase, uniform distribution of the perform material may not be possible. In order to uniformly distribute the perform material, the pressure inside the preform must be carefully controlled.

Typical blow-moulding bottle sizes may vary in volume from 0.2L to 3.0L, providing a volume range factor of 3.0/0.2 = 15. In order to generate a pressure profile for a variety of bottle sizes, it is known from WO 2015/063202 to use a throttle including an inlet, an outlet, and an orifice sleeve, preferably arranged close to the low pressure blow valve in the blow head. The inlet is in communication with a pressurized gas source. The outlet further includes a selected output orifice. The orifice sleeve further includes a plurality of output orifices. The selected output orifice may be selected from the plurality of output orifices by rotating the orifice sleeve. Thus, a manufacturer can select an adequate fluid rate for each bottle size being fabricated.

Especially when small quantities of bottles are produced the change-over time for making the stretch blow-moulding machine ready for different bottle sizes and shapes is of essence. Apart from changing the moulds it is also important to adjust the throttle to a flow rate that is appropriate for each type of bottle. The stretch blow-moulding machines operate with fluid pressures up to 40 bar, which is a potential risk for humans if exposed to an uncontrolled fluid discharge in case of a mal function or an operator error. Due to safety regulations an operator must not manipulate the throttle as long as the stretch blow-moulding machine is under pressure. Therefore, in order to access the throttle, it is mandatory to depressurize the stretch blow moulding machine. Including the time to re-pressurize the machine before putting it back to operation increases the down-time during a changeover.

There is a need in the art for a throttle that is easy to configure and operate to provide resolution under a variety of conditions to finely control pressure. The present embodiments described below overcome these and other problems and an advance in the art is achieved.

A blow moulding device for expanding thermoplastic forms into hollow thermoplastic containers comprises at least one valve connectable to a at least one blowing fluid source for injecting a blow fluid from the blow fluid source into the thermoplastic form. A flow rate controlling valve is connected in series to the at least one valve for reducing the flow rate of the blow fluid to a predefined flow rate. The predefined flow rate is controlled by a control pressure which is received at a control port of the flow rate control valve.

As the control pressure can be easily controlled from a control panel for example, there is no need to have an operator to manually change a setting of a throttle. In contrast to solutions, where the throttle is controlled by an electric motor or by a proportional valve, this solution has less weight, which is especially beneficiary when the blow moulding device is displaced during operation. Especially when the blow moulding device is part of a conveying apparatus which rotates, a control pressure applied from a stationary device to the rotating blow moulding device is more reliable when communicated via a rotary unit from a stationary part to a rotary part, than an electrical signal using a slip ring.

In another aspect of the invention the control pressure is generated by a proportional valve, for example a proportional valve that is actuated by a solenoid. By applying a specific voltage to the solenoid of the proportional valve a user can set a specific pressure.

In an alternative aspect of the invention the control pressure is generated by a pressure regulator. The user sets a control input value to a desired target value and the pressure regulator will provide this target pressure at its output port. The pressure regulator may comprise for this purpose a proportional valve with a pressure sensor for sensing the pressure at its output port and a control device for controlling the proportional valve such that the actual value of the pressure at its output port corresponds to the selected pressure value.

Both aspects provide the advantage that a pressure regulator or a proportional valve, which are heavier than a fluid-controlled throttle can be located apart, in a stationary control unit for example, and do not need to rotate with the blow moulding devices.

In another aspect of the invention the proportional valve is controlled by an electrical control signal. This has the advantage that a control circuit can be used to provide a user interface allowing a user to select a flow rate value from remote. The control circuit generates in response to a selected flow rate the electrical control signal at a value that corresponds to the selected flow rate.

In another aspect of the invention the blow moulding apparatus is adapted for the production of a plurality of different containers. Advantageously the control circuit comprises a memory for storing an individual flow rate value for each of the plurality of different containers that may be produced by the blow moulding apparatus. This has the further advantage that also other production parameters may be stored and recalled every time moulds are changed at the blow moulding device.

In another aspect of the invention the blow moulding apparatus is adapted for the blow moulding of a plurality of containers by providing a plurality of blow valve pistons, wherein the flow rate of the blow fluid applied by each blow valve piston is controlled individually by an individual flow rate controlling valve, whereby each of the individual flow rate controlling valves is controlled by a single control fluid pressure.

In another aspect of the invention the blow moulding apparatus comprises a first valve for pre-expanding the form at a low pressure value by feeding low-pressure blow-moulding fluid from a low-pressure fluid supply and comprising a second valve for blow-moulding the form into its final shape by feeding a high-pressure blow-moulding fluid from a high-pressure moulding fluid supply and that the flow rate controlling valve is in series with the first valve.

The flow rate controlling valve comprises a first port, a second port and a spool. When the spool is actuated, it moves in axial direction within a valve body between a minimum flow position and a maximum flow position. The flow rate controlling valve further comprise, a circumferential groove which has in axial direction an elongated transition between a maximum depth of the groove and a minimum depth of the groove.

The flow rate controlling valve in the minimum flow position is in a closed position in which the elongated groove of the piston does not overlap with an opening of a port of the spool.

The flow rate controlling valve the second port is an outlet port.

The flow rate controlling valve is actuated by a fluid which is applied by a control port to one face side of the spool. In most applications in stretch blow moulding pressurized air is used a most convenient means of choice. Alternatively, however, the fluid may be a pressurized liquid.

The restoring force is exercised as a counter force to the actuating force generated by the actuating fluid. A very convenient way to generate this counter force is a return spring. When the spring is biased, for example by a screw that allows for compressing and decompressing of the spring, the return force can be adjusted individually. Thus, the flow rate of all fluid-controlled throttles may be adjusted to a same level for a given control pressure prior to taking the blow moulding apparatus into operation and from time to time during operation.

The flow rate controlling valve is an integral part of a blow moulding apparatus, in particular a blowing head which comprises the blow valve piston and the at least one valve.

In another embodiment of the invention a blow moulding apparatus comprising a rotating conveyor device with a plurality of blow moulding devices comprising a fluid-controlled throttle according to the invention. The blow moulding devices are mounted on the rotating conveyor device. A control fluid source, for example installed in a control panel, is located apart from the conveyor device. A rotary unit is arranged at the rotating conveyor device for communicating fluids between a stationary part of the rotary unit and a rotary part of the rotary unit, and that the stationary part of the rotary unit is in a first fluid communication with the control fluid source. The control ports of the flow rate controlling valves of the blow moulding devices are in fluid communication with the rotary part of the rotary unit.

The invention further comprises a method for expanding thermoplastic forms into hollow thermoplastic containers. The method comprises placing a thermoplastic form in a mould cavity; injecting a blow fluid from a blow fluid source into the thermoplastic form; providing a valve for interrupting the injection of the blow fluid into the thermoplastic form; providing a fluid-controlled throttle in series to the valve; applying a control pressure to a control port of the fluid-controlled throttle in order to reduce the flow rate of the blow fluid to a predefined flow rate as a function of the control pressure.

The invention will be now described in more detail by taking reference to the drawings. The same reference number represents the same element in all drawings. It should be understood that the drawings are not necessarily to scale.
FIG. 1 depicts a schematic overview of a rotating blow moulding apparatus.
FIG. 2a depicts a blow moulding unit with a fluid-controlled throttle in more detail in a mixed view.
FIG. 2b depicts another embodiment of a blow moulding unit with a fluid-controlled throttle in more detail in a mixed view.
FIG. 3 depicts the blow moulding unit of Fig. 2a with a fluid-controlled throttle in a full cross-sectional view.
FIG. 4a, 4b depicts a fluid-controlled throttle in more detail.
FIG. 5 depicts a spool with a different geometry.
FIG. 6 depicts a visualisation of process steps performed by the blow moulding apparatus.

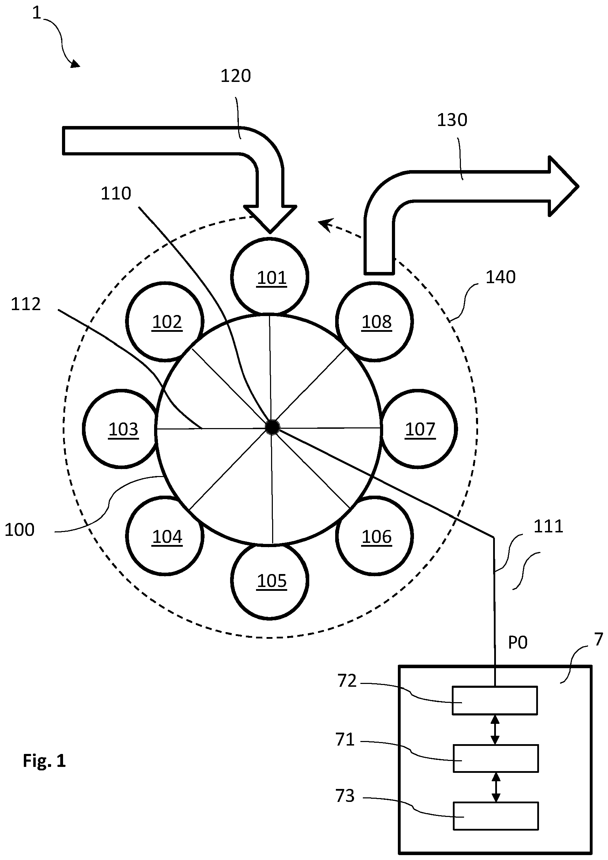

FIGS. 1-6 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention.

The invention may be used in a stretch blow moulding unit for producing for example plastic material containers 8, such as bottles, from of Polyethylene terephthalate (PET) preforms. Fig. 1 shows in a schematic drawing, as part of a stretch blow moulding apparatus 1, a blow wheel 100 where a plurality of stretch blow moulding units 101, 102, 102, 104, 105, 106, 107, 108 are arranged in annular form around the blow wheel 100. Each stretch blow moulding unit 101, 102, 102, 104, 105, 106, 107, 108 substantially comprises a mould 600 and a blow head 400. The blow head 400 basically comprises a blow cylinder 230, several blowing valves, a nozzle 202, a blowing bell 500 and a stretch rod 203. The plurality of blow moulding units 101, 102, 102, 104, 105, 106, 107, 108 allows for producing more bottles at a time. At the time of the application up to forty stretch blow moulding units were used in high speed stretch blow moulding apparatus yielding about 85.000 bottles per hour.

Each stretch blow moulding unit 101, 102, 102, 104, 105, 106, 107, 108 comprises at least one fluid-controlled throttle 310 for adjusting the volumetric flow rate of a pre-blowing pressure source P1. All fluid-controlled throttles 310 of a blowing wheel 100 may be controlled by a single volumetric flow rate control pressure source P0. This single volumetric flow rate control pressure source P0 may be situated apart from the blowing wheel 100 in a stationary control panel 7. The stationary control panel 7 may have selection means 71 to set a value for a pressure source 72 to a specific pressure level p0, or to a flow rate Q1 that corresponds to a pressure level p0. The selection means 71 may be designed as a user interface with a display, input means, and a control circuit, for example a microcomputer. The stationary control panel 7 may have storing means 73 for storing pressure level values or flow rate values for a plurality of plastic containers to be produced by the stretch blow moulding units 101, 102, 102, 104, 105, 106, 107, 108. A user may then select via the selection means 71 a specific product and the selection means retrieves from the storing means 73 the appropriate pressure level p0 for the selected product and controls the pressure source P1 accordingly.

The control pressure p0 may be transferred from the control pressure source P0 by first conduits 111 to a rotary unit 110 of the blowing wheel 100. Within the blowing wheel 100 the volumetric flow rate control pressure p0 is distributed by second conduits 112 to each fluid-controlled throttle 310 of each blow moulding unit 101, 102, 102, 104, 105, 106, 107, 108. By this arrangement the volumetric flow rate of the pre-blowing fluid Q1 of each blow moulding unit 101, 102, 102, 104, 105, 106, 107, 108 can be controlled centrally at the stationary control panel 7. The advantage of the fluid-controlled throttle 310 is that in contrast to electrically actuated throttles instead of a slip ring for transmitting an electrical signal, the control pressure is transmitted by a rotary unit 110, which is much more reliable than a slip ring.

The stretch blow moulding apparatus 1 comprises a conveying device that conveys the plastic material containers along a conveying path. At the beginning of the conveying path preforms 800 are lined up and preheated in a furnace. The preheated preforms 800 are then transferred by a preform transfer wheel, indicated by an arrow 120, into the opened stretch blow moulding mould 600. During a rotation, indicated by arrow 140, of the blow wheel 100 several process steps A, B, C, D, E, F, G, H, I, J, K are performed to shape the preform 800 into its final form. The mould 600 opens again and the shaped container 8 is picked up by a container transfer wheel. The container transfer wheel is represented in Fig. 1 by an arrow 130.

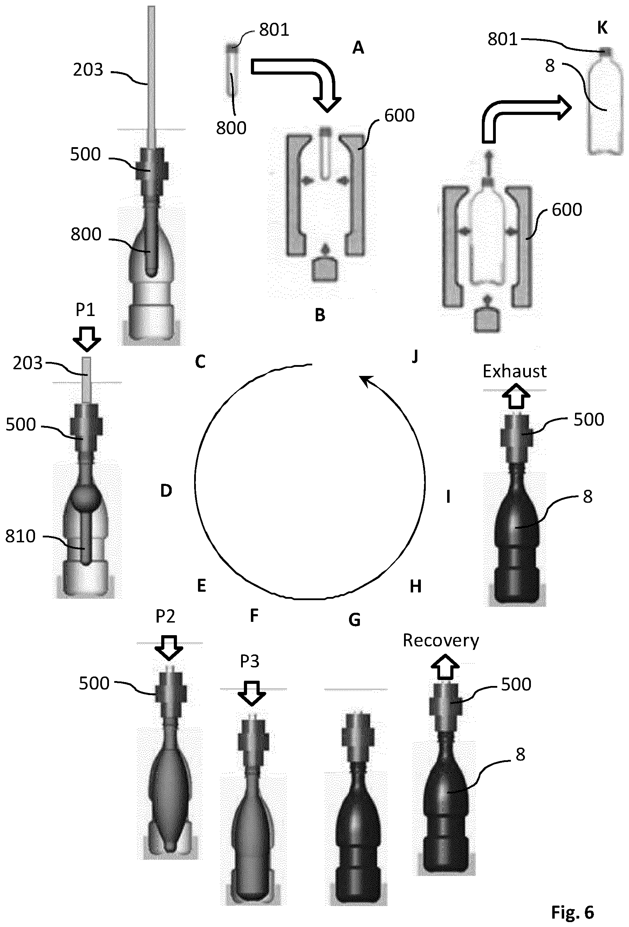

FIG. 6 shows a visualization of the different process steps which are performed during a rotation of the blowing wheel 100. Process step A is the first process step in a shaping cycle of the plastic material container 8. In process step A the preheated preform 800 is transferred by the preform transfer wheel 120 into the opened mould 600. In a next process step B, while the blowing wheel 100 keeps rotating, the mould 600 is closed and a blowing bell 500 is attached to a threaded neck 801 of the preform 800 forming a fluid tight seal around the preform neck 801. In a next process step C the stretch rod 203 is inserted into the hollow preform 800 and stretches the preform 800 in longitudinal direction while a head of the stretch rod 203 is in contact with an inner bottom 803 of the preform 800 and pushes the bottom 803 of the preform 800 downwards, i.e. away from the neck 801 of the preform 800. In a next process step D a pre-blowing fluid P1 is applied to the inner volume of the stretched pre-form 800. The flowrate Q1 of the pre-blowing fluid P1 is controlled by the fluid-controlled throttle 310. Controlling the flow rate Q1 is crucial for achieving a uniform thickness of the container wall of the final product. If for example the flow rate for a given container size is too high, the container may have a thinner wall thickness in its upper part than in its lower part and vice versa.

In next process steps the plastic material container 8 is blown in one step with a second fluid P2 of a final pressure or in several steps E, F with several fluids P2, P3 of increasing pressure, into its final shape. The flow rate for the second fluid or any other fluid usually is not critical and therefore usually does not need to be controlled. In case there is a need, it is of course possible to use as many fluid-controlled valves as necessary for controlling additional blowing valves 330 and/or 340 and/or 350 in addition to the pre-blowing valve 320.

In a next process step G, after the fluid flow practically has come to an end, the final pressure is P3 continued to be applied to the plastic material container 8 to keep it in shape while the plastic material cools down. In a next step H the fluid from inside the plastic material container 8 is transferred to a fluid recovery station 349. In a next step I the fluid that cannot be recovered by the fluid recovery station 349 is released to atmosphere. In a next step J the mould 600 opens and in a final step J the shaped plastic material container 8 is picked up by container transfer wheel 140 and the process cycle starts over again. The person skilled in the art appreciates that the process steps may require time intervals of different length and that the visualization does not indicate these different time intervals.

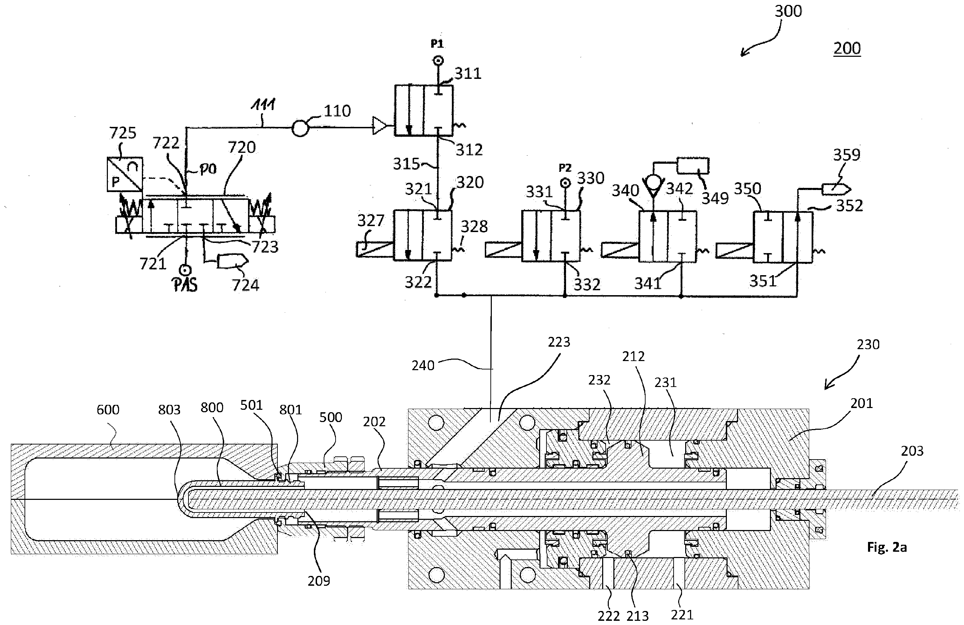

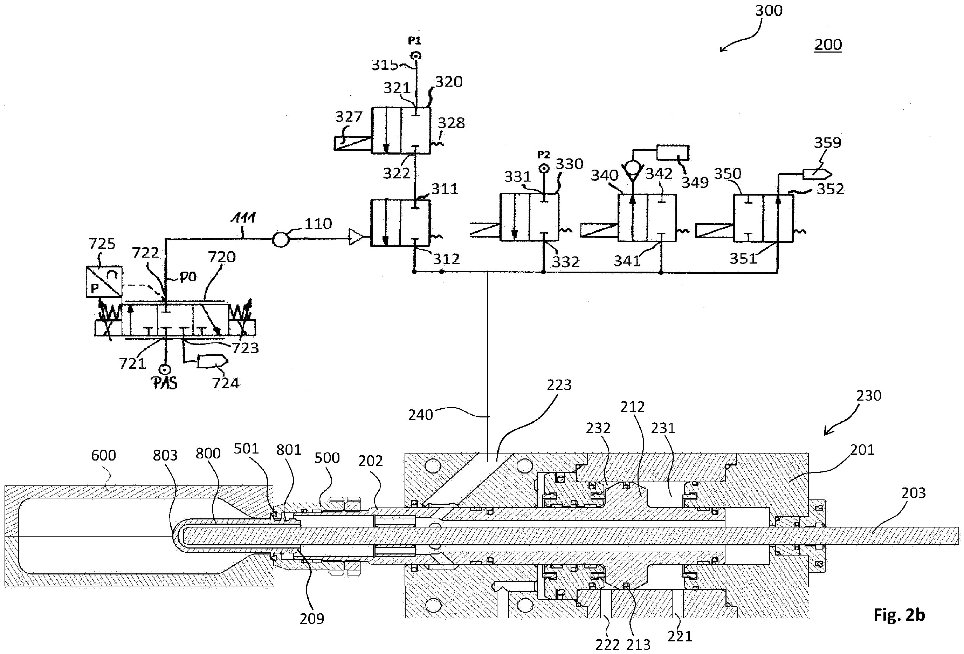

FIG. 2a shows in a mixed view of the stretch blow moulding unit 200 according to an embodiment. The stretch blow moulding unit 200 basically can include a blowing head 400 and the mould cavity 600 for receiving the preform 800. The blowing head 400 may comprise a blow cylinder 230, a nozzle 202 arranged and adapted to glide inside the blow cylinder 230, a stretch rod 203 arranged and adapted to glide inside the nozzle 202, a blowing bell 500 arranged at an end of the nozzle 202 for forming a substantially fluid-tight seal with the preform 800, a plurality of blow-mould valves 320, 330, 340, 350 and a fluid-controlled throttle 310. A cylinder body 201 protects the components of the blow cylinder 230, defines essentials pathways, and keeps the components of the blow cylinder 230 in alignment. The cylinder body 201 is a body that houses at least portion of the nozzle 202, the stretch rod 203 and a blow piston 212. The cylinder body 201 also includes fluid ports, such as a first blowing piston port 221 and a second blowing piston port 222. In the embodiment of Fig. 2 the cylinder body 201 includes one or more cavities to accommodate a blowing piston 212.

The blow cylinder 230, the nozzle 202, the stretch rod 203, the blowing bell 500 and the mould cavity 600 are shown in in Fig. 2a and Fig. 2b in a cross-sectional view whereas the plurality of valves 320, 330, 340, 350 and the fluid-controlled throttle 310 are represented in Fig. 2a and 2b by circuit diagrams. The blow mould valves 320, 330, 340, 350 comprise a pre-blowing valve 320, a blowing valve 330, an air recovery valve 340 and an exhaust valve 350. The pre-blowing valve 320, the blowing valve 330, the air recovery valve 340 and the exhaust valve 350 are implemented in this embodiment as 2/2-way spool valves. The pre-blowing valve 320, the blowing valve 330 and the air recovery valve 340 are normally closed valves. In order to allow for a fluid communication between their ports they have to be actuated into an on-position. For reasons of safety the exhaust valve 350 is a normally on valve. When not actuated the exhaust valve 350 allows for a fluid communication between its first port 351 and its second port 352. The second port 352, due to its function also called an outlet port 352, is connected to an exhaust silencer 359. This ensures that in a deenergized state of the blowing apparatus the exhaust valve 350 allows for a discharge of the mould cavity 600. In order to stretch blow-mould the exhaust valve 350 has to be actuated into its closed positions.

In some embodiments, the blow-mould valves 320, 330, 340, 350 and the fluid-controlled throttle 310 may be coupled to the blow cylinder 230. Further, it should be appreciated that in order to simplify the complexity of the drawings while electrical cabling is not shown in FIG. 2, the valves 320, 330, 340, 350 can be connected to appropriate electronics to control actuation of the valves. Alternatively, the valves 320, 330, 340, 350 may be controlled mechanically or with a pilot pressure, for example. Therefore, the valves 320, 330, 340, 350 should not be limited to electronic control.

According to an embodiment, the blowing bell 500, which accommodates the nozzle 202, is adapted to form a substantially fluid-tight seal with the preform 800, when the preform 800 is positioned partially in the mould cavity 600. For this purpose, the blowing bell 500 may comprise a seal ring 501, which when the blowing bell 500 is extended towards the mould cavity 600, is pressed onto a neck portion of the preform 800. In other embodiments the seal ring 501 may be in contact with an opening portion of the preform 800. In FIG. 2a a portion of the preform 800 is shown outside of the mould cavity 600 and coupled to the blow cylinder 230. In other embodiments, the blow cylinder 230 may be coupled to the mould cavity 600 and the entire preform 800 may be positioned within the mould cavity 600. It should be appreciated that the mould cavity 600 may be provided as a separate component by an end user, for example, and may not form part of the stretch blow moulding unit 200. Therefore, the stretch blow moulding unit 200 may be adapted to couple numerous different types of mould cavities 600 and preforms 800.

According to the embodiment provided in FIG. 2a, the stretch rod 203 is actuated by an electrical motor, which for sake of clarity is not shown in any of the figures. The person skilled in the art my appreciate that the stretch rod 203 may be actuated by any other appropriate actuator, such as a pneumatic actuator and that the nature of the stretch rod actuator should in no way limit the invention.

According to an embodiment, the blow piston 212 separates the blow cylinder 230 into a first chamber 231 and a second chamber 232. According to an embodiment, the blow piston 212 is a radial extension of the nozzle 202. The blow piston 212 may include a sealing member 213, which can provide a substantially fluid-tight seal between the blow piston 212 and the blow cylinder 230. According to an embodiment, the first blow piston port 221 is in fluid communication with the first chamber 231 and the second blow piston port 222 is in fluid communication with the second chamber 232. According to an embodiment, when pressurized fluid is provided to the first blow piston port 221, the first chamber 231 is pressurized thereby actuating the blow piston 212 and thus, the blowing bell 500 in a first direction. Conversely, when pressurized fluid is provided to the second blow piston port 222, the second chamber 232 is pressurized, which actuates the blow piston 212 and thus, the blowing bell 500 in a second direction, substantially opposite the first direction. Fig. 2 shows the blow piston 212 extended towards the mould cavity 600, thus closing the blowing bell 500 onto the mould cavity 600.

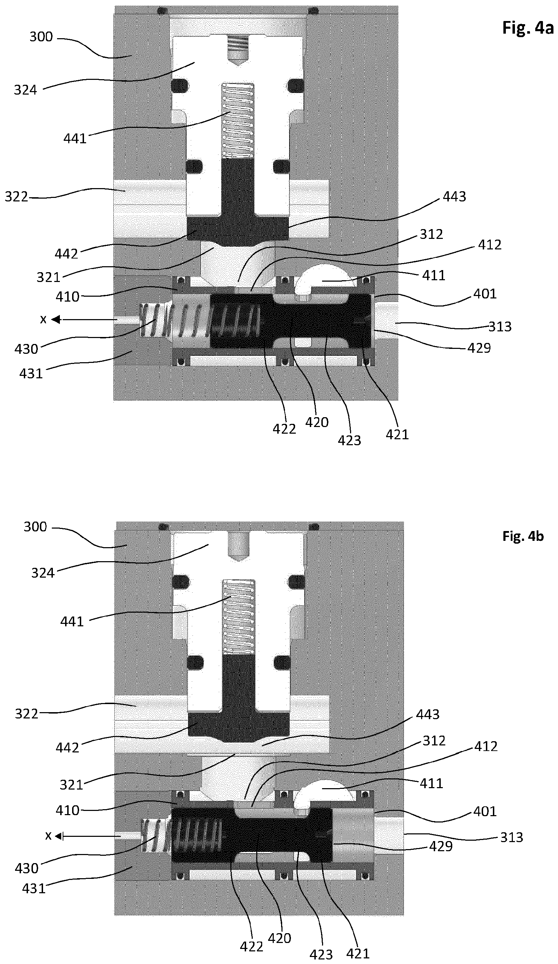

According to an embodiment, the pre-blowing valve 320 is in fluid communication with the fluid-controlled throttle 310 via a fluid pathway 315 according to figure 2a, which connects a second port 312 of the fluid-controlled throttle 310 with a first port 321 of the pre-blowing valve 320. A first port 311 of the fluid-controlled throttle 310 can be in fluid communication with a pre-blowing pressure supply P1. The fluid-controlled throttle 310 is controlled by a control pressure applied to a third port 313 of the fluid-controlled throttle 310. The fluid-controlled throttle 310 controls the volumetric flow rate of the fluid passing from its first port 311 to its second port 312. The volumetric flow rate may not be proportional, but within the operating range the volumetric flow rate increases with increasing control pressure P0. Constructional details of the fluid-controlled throttle 310 are provided further down in connection with Fig. 4.

The control pressure P0 is for example provided by a control pressure valve 720, which in one embodiment is a proportional valve with a pressure sensor providing an electrical control device 725 with a pressure reading of the pressure sensed at a second port 722, i.e. the output port of the proportional valve. A first port 721 of the control pressure valve 720 is in fluid communication with a working pressure source PAS. A third port 723 of the control pressure valve 720 is in communication with a silencer 724 in order to release fluid to atmosphere. The working pressure source PAS provides compressed air at pressure range between 6 and 10 bar. When the pressure at the second port 722 is lower than a pre-selected pressure p0 the control device 725 actuates the spool of the of the control pressure valve 720 in a first direction, in which the flow from the first port 721 to the second port 722 is increased. In the contrary, when the control device 725 senses that the pressure at the second port 722 is higher than the preselected pressure, the control device 725 actuates the spool of the of the control pressure valve 720 in a second direction, opposite to the first direction, by which the flow from the first port 721 to the second port 722 is decreased and if the sensed pressure level is still too high finally the second port 722 comes in fluid connection with the third port 723 and surplus pressure is released via the silencer 724 to atmosphere.

The control pressure is p0 transmitted from the control pressure valve 720 via a first conduit 111 to a stationary part of the rotary unit 110 of the blowing wheel. From rotary part of the rotary unit 110 several second conduits 112 distribute the control pressure fluid P1 to a plurality of control ports 313 of the plurality of fluid-controlled valves 310.

Advantageously the control pressure valve 720 is located apart from the blowing unit 200, and even apart from the blowing wheel 100 to which the blowing units 200 are attached to.

According to the embodiment shown, the pre-blowing valve 320 comprises a solenoid-actuated valve with a solenoid 327; however, in other embodiments, the pre-blowing valve 320 could be fluidly or mechanically actuated. The particular method used to actuate the pre-blowing valve 320 should in no way limit the scope of the present embodiment. In the embodiment shown, a spring 328 or other biasing member is provided to bias the proportional pre-blowing valve 320 to its first position in which there is no fluid communication between its first port 321 and its second port 322. As already stated in the beginning, the pre-blowing valve 320 in this embodiment is a normally closed valve.

According to an embodiment, the pre-blowing pressure supply P1 may be at a first pressure. According to an embodiment, the first pressure is approximately 12 bar (174 psi), for example; however, other pressures may be used. While the pre-blowing pressure supply P1 is typically air, other gases may be used depending on the particular application. When in the second position the first port 321 is in fluid communication with the second port 322 and the second port 311 of the fluid-controlled throttle 310. Consequently, the pressurized fluid source P1 is in fluid communication with a blow fluid pathway 240, which leads to the preform 800 via a third port 223 formed in the blow cylinder 230 and the opening 209 between the stretch rod 203 and the preform 21. As can be appreciated, while the pre-blowing valve 320 may be fully opened, the rate at which the pressurized fluid is provided from the pressurized fluid source P1 to the preform 800 is reduced by the fluid-controlled throttle 310.

As can be appreciated, the pre-blowing valve 320 can be used to pressurize the preform 800 to a predetermined pressure while the stretch rod 203 extends in the longitudinal direction. The use of the pre-blowing valve 320 in combination with the fluid-controlled throttle 310 allows the pressure, which is supplied to the preform 800 to be more accurately controlled. In one example, the actuation of the pre-blowing valve 320 can be controlled based on a stretch rod position as determined by an electric linear motor that actuates the stretch rod 203. According to another embodiment, the actuation of the pre-blowing valve 320 can be controlled based on an actuation time. For example, the pre-blowing valve 320 can be actuated for predetermined lengths of time.

According to an embodiment, the pre-blowing phase D ends after a predetermined amount of time or once the pressure in the preform 800 reaches a threshold pressure. Upon the end of the pre-blowing phase D, the pre-blowing valve 320 can be actuated back to the closed position.

According to an embodiment, after the pre-blowing phase D, the unit 200 enters the blowing phase E, F, G. During the blowing phase E, F, G, the blowing valve 330 can be actuated from a first position to a second position. As mentioned before, according to an embodiment, the blowing valve 330 is a typical on/off valve without proportional control. Once actuated to the second position, the first fluid port 331 is in fluid communication with the second fluid port 332. According to an embodiment, the first port 331 can be in fluid communication with a blowing pressure supply P2. The blowing pressure supply P2 may be at a second pressure p2. According to an embodiment, the second pressure p2 is higher than the first pressure p1. According to an embodiment, the second pressure p2, can be approximately 40 bar (580 psi), for example. However, the particular blowing pressure used will depend on the particular application and should in no way limit the scope of the present embodiment. While the blowing fluid is typically air, other gases or fluids may be used depending on the particular application. As the blowing valve 330 is actuated to the second position, the blowing pressure is supplied from the second port 332 of the blowing valve 330 via the blow fluid pathway 240 to the stretched preform 810. As discussed above, during the blowing phase E, F, G, the stretched preform is expanded towards inner walls of the mould cavity 600 and shaped into the final plastic material container 8.

It should be appreciated that while a single blowing valve 330 is provided, more than one blowing valve may be used. For example, if two blowing valves were used, a first blowing valve may be used to raise the pressure from the pre-blowing pressure to approximately 20 bar (290 psi) while the second blowing valve could raise the pressure in the preform from 20 bar (290 psi) to 40 bar (580 psi). Consequently, those skilled in the art will readily recognize that the present embodiment is not limited to a single blowing valve 330.

According to an embodiment, at the end of the blowing phase E, F, G, the one or more blowing valves 330 can be closed. During the next phase of operation, the air recovery phase H, the air recovery valve 340 can be actuated from a first position to a second position. In the second position, the first fluid port 341 is in fluid communication with the second fluid port 342 of the air recovery valve 340. Upon being actuated to the second position, a portion of the air in the formed product can be sent via the blow fluid pathway 240 to an air recovery station 349. In some embodiments, the air recovery station 349 may be in fluid communication with the pre-blowing pressure supply P1, for example. Therefore, the pre-blowing pressure supply P1 may not require a separate fluid source. As can be appreciated, in embodiments where more than one blowing valve 330 is provided, more than one air recovery valve 340 may be used. It should be also appreciated that the air recovery phase is optional.

Once the air recovery phase H is complete, the air recovery valve 340 can be closed. At the end of the air recovery phase H, the exhaust valve 350 can be actuated from a first position to a second position to exhaust in an exhaust phase I the remaining pressure via the blow fluid pathway 240 to atmosphere. In the second position, a first fluid port 351 is in fluid communication with a second fluid port 352. Although separate air recovery and exhaust valves are shown and described, it should be appreciated that in alternative embodiments, the blowing valve 330 may be configured to act as the exhaust valve and optionally as the air recovery valve. For example, the blowing valve 330 could comprise a 3/2-way valve that can be actuated to supply the blowing pressure, exhaust to the air recovery station 349, exhaust to atmosphere, and close all ports. Therefore, the present embodiment should not be limited to requiring a separate and distinct air recovery valve 340 and exhaust valve 350.

FIG. 2b shows the same embodiment as in FIG. 2a, but the position of the pre-blowing valve 320 and the throttle 310 have been swapped. Same reference signs have been used in both Fig. 2a and FIG. 2b for same objects.

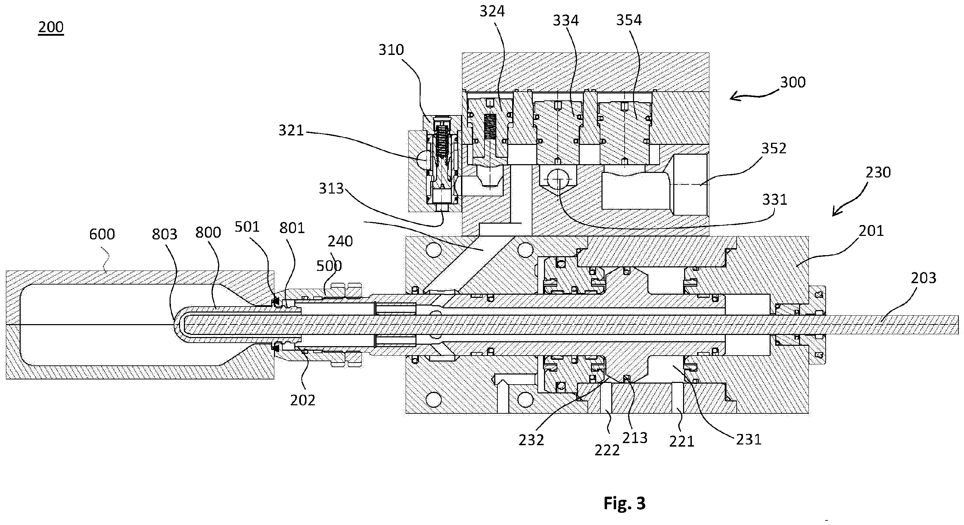

Fig. 3 shows a full cross-sectional view of the blowing unit 200 shown in Fig. 2a. Same elements are referred to with the same reference signs. In this cross sectional view the fluid-controlled throttle 310, pre-blowing valve 320, the blowing valve 330, and the exhaust valve 350 arranged in a valve block 300 which is attached for the cylinder body 301. For the sake of clarity only a pre-blowing piston 324 of the pre-blowing valve 320, a blowing piston 334 of the blowing valve 330 and an exhaust piston 354 of the exhaust valve 350 are represented with reference signs. The recovery valve 340 is in the view of the drawing on the back of the valve block 320 and therefore not visible in this cross-sectional view. The fluid-controlled throttle 310 is attached to the left of the valve block 320 so that its outlet port 312 is directly connected to the inlet port 311 of the pre-blowing valve 320. For clarity reasons the reference signs 312 and 311 are omitted in Fig. 3 but are depicted in more detail in Fig. 4a and Fig. 4b. The pre-blowing piston 324 of the pre-blowing valve 320 is depicted in a closed position. When the pre-blowing piston 324 is actuated to an open position it moves in the view of Fig. 3 vertically upwards and thereby opens a fluid passage for the pre-blowing fluid P1 from the inlet port 321 of the fluid-controlled throttle 310 via the blow fluid pathway 240 to the blow cylinder 230 and ultimately into the thermoplastic form 800 that is positioned in the blowing cavity 600. The volumetric flow rate Q1 of the pre-blowing fluid P1 is thereby controlled by the control pressure p0 that is applied to the control port 323 of the fluid-controlled throttle 310.

After the pre-blowing phase has ended, the pre-blowing piston 324 is no longer actuated and falls back into its closed position. The blowing piston 334 is now activated and opens a pathway for the blowing fluid P2 from the inlet port 331 via blow fluid pathway 240 to the blow cylinder 230 and ultimately into the thermoplastic form 800. After the blowing phase has ended the blowing piston 334 is no longer activated and falls back to its closed position. Now the recovery valve 340 (not visible in the cross cut of Fig. 3) is activated to let the pressurized blowing fluid that is contained in the final shaped container 8, the blow cylinder 230 and the fluid pathway 240 partially evacuate to the fluid recovery station 349. After the exhaust piston 334 is back in its closed position, the exhaust valve piston 354 is opened and allows the blowing fluid that is remaining in in the final shaped container 8, the blow cylinder 230 and the fluid pathway 240 to be released via the outlet port 352 and the silencer 359 (not shown in Fig. 3) to atmosphere.

FIG. 4 shows part of a blowing head 400 in more detail. It can be seen now clearly that the pre-blowing valve 320 and the fluid-controlled throttle 310 are arranged closely to each other thus that the second port, i.e. the output port 312 of the fluid-controlled throttle 310 conduits the flow of fluid straight and directly into the first port, i.e. the input port 321 of the pre-blowing valve 320.

The fluid-controlled throttle 310 receives the control pressure p0 at the control port 313 of the fluid-controlled throttle 310. A working fluid is received at the first port, i.e. the input port 311 of the fluid-controlled throttle 310. The fluid-controlled throttle 310 comprises a spool 420 which is guided by a sleeve 410. The valve block 300 provides a housing for the fluid-controlled throttle 310. The sleeve 410 is inserted into a bore of the blowing head 400. The sleeve 410 and the spool 420 are made of metal. When sleeve 410 and spool 420 are manufactured with high precision there is no need for a sealing means between spool 420 and sleeve 410. This allows for a high repetition accuracy as rubber or silicon seals have shown to introduce by higher friction and switching hysteresis a greater repetition error bandwidth.

The spool 420 is biased by a return spring 430 which pushes the spool 420, if no control pressure p0 is applied, into a first position. A movement beyond the first position is blocked by a mechanical stop 401. This first position is also referred to as a zero-stroke position, as this is the resting position of the spool 420. If a control pressure is applied on the control port 313 the force exercised by the pressure on a first spool face 429 acts against the restoring force of the compressed return spring 430 and pushes the spool 420 in axial direction x to a second position until the restoring force of the return spring 430 balances the force exercised by the pressure p0 on the first spool face 421. The higher the control pressure p0 the more the second position is away from the first position. When the maximum defined pressure of the control pressure is applied the spool 420 is displaced to a maximum stroke of 420 and therefore this third position is called full stroke position.

The sleeve 410 has a first cut-out 411 which allows for a fluid communication with the working pressure inlet port 311 and a second cut-out 412 which allows for a fluid communication with the outlet port 312. The spool 420 has between a first land 421 and a second land 422 an elongated groove 423 in the shape of a trough, i.e. the edges of the groove 423 close to the bottom of the groove 423 are rounded. The length of the groove is designed such that in any available position of the spool 420 between the first position and the third position, the groove 423 is in fluid communication with the first cut-out 411 of the sleeve 410. In the first position, the second land 421 of the spool 420 blocks any fluid communication between the groove 423 and the second cut-out 432. When displaced to any second position in between the zero-stroke position and the full stroke position the groove 423 is exposed to the second cut-out 412 and allows for a fluid communication between the first cut-out 411 and the second cut-out 412. In case the pre-blowing fluid is not blocked by the pre-blowing valve 320, the larger the exposure of the groove 423 the higher is the flow rate Q1 of the pre-blowing fluid passing from the inlet port 311 to the outlet port 312. Fig. 4b depicts the fluid-controlled throttle 310 where the spool 420 is in full stroke position and Fig. 4a depicts the fluid-controlled throttle 310 where the spool 420 is in a position corresponding to 10% of the full stroke position.

The pre-blowing valve 320 has a pre-blowing piston 324 which is actuated by a solenoid (not shown). A return spring 441 pushes a non-return piston 442 in a non-actuated position downwards, which is attached to the pre-blowing piston 324 is pressed against a seal seat 443. This blocks any fluid communication between the inlet port 321 and the outlet port 322 of the pre-blowing valve 320. When the pre-blowing valve 320 is actuated, the piston 324 is displaced upwards and consequently the non-return piston 442 is detached from the seal seat 443. This allows for a fluid communication between inlet port 321 and outlet port 402b of the pre-blowing valve 320. In case the fluid-controlled throttle 310 is not in the zero-stroke position this consequently allows for a flow of the pre-blowing fluid from the inlet port 311 of the fluid-controlled throttle 310 to the outlet port 322 of the pre-blowing valve 320 at a volumetric fluid rate Q1 that is set by the control pressure p0 from the control pressure source P0.

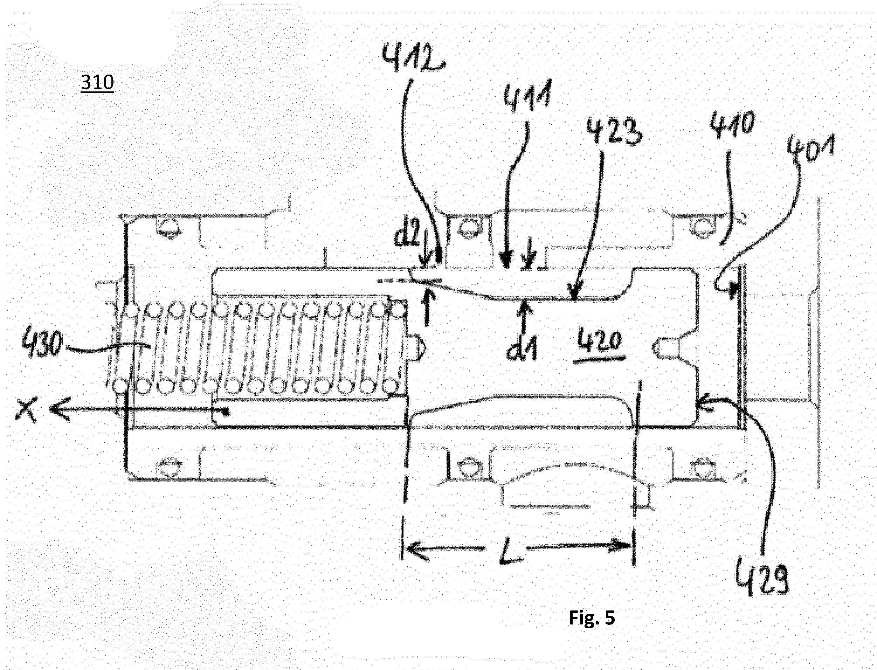

In another embodiment Fig. 5 shows a spool with a modified geometry. At the end of the groove 423 that is close the piston face 429 of the spool 420 the groove 423 attains a maximum depth d2 of the groove 423 immediately. The maximum depth is maintained in axial direction x for more than half of the axial length L of the groove 423 and then raises to a minimum groove depth d1, which is about a third of the total groove depth d2. This improves the linearity Q1 of the flow rate at small strokes of the spool 420.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description.

Thus, although specific embodiments are described herein for illustrative purposes, various equivalent modifications are possible within the scope of the present description, as those skilled in the relevant art will recognize. The teachings provided herein can be applied to other blow moulding units, and not just to the embodiments described above and shown in the accompanying figures. Accordingly, the scope of the embodiments described above should be determined from the following claims.

## Claims

1. A blow moulding device (101) for expanding a thermoplastic form (800) into a hollow thermoplastic container the blow moulding device, comprising
- at least one valve (320) connectable to at least one blowing fluid source (P1) for injecting a blow fluid from the blowing fluid source (P1) into the thermoplastic form (800),
- a flow rate controlling throttle (310) connected in series to the at least one valve (320), wherein the flow rate controlling throttle (310) reduces the flow rate of the blow fluid to a predefined flow rate (Q1), wherein the predefined flow rate (Q1) is controlled by a control pressure (p0) which is received at a control port (313) of the flow rate controlling throttle (310).

2. A blow moulding device (101) according to claim 1, **characterized in that** the control pressure (p0) is generated by a pressure regulator (720).

3. A blow moulding device (101) according to claim 1 or 2, **characterized in that** the control pressure (p0) is generated by a proportional valve.

4. A blow moulding device (101) according to claim 3, **characterized in that** the proportional valve is controlled by an electrical control signal.

5. A blow moulding device (101) according to claim 4, **characterized in that** a control circuit (270) provides a user interface allowing a user to select a flow rate value and that the control circuit (270) in response to a selected flow rate value generates the electrical control signal at a value that corresponds to the selected flow rate value.

6. A blow moulding device (101) according to claim 5, **characterized in that** the blow moulding device (101) is adapted for the production of a plurality of different containers (8) and that the control circuit (270) comprises storage means (73) for storing an individual flow rate value for each of the plurality of different containers (8) that may be produced by a blow moulding apparatus (100).

7. A blow moulding device (101) according to any of claims 1 to 6, **characterized in that** the blow moulding device (101) comprises a first valve (320) for pre-expanding the thermoplastic form (800) at a low-pressure value (p1) by feeding low-pressure blow-moulding fluid from a low-pressure fluid supply (P1) and comprising a second valve (330) for blow-moulding the thermoplastic form (800) into its final shape by feeding a high-pressure blow-moulding fluid from a high-pressure moulding fluid supply (P2) and that the flow rate controlling valve (310) is in series with the first valve (320).

8. A blow moulding apparatus (1) with a plurality of blow moulding devices (101, 102) according to any of claims 1 to 6 arranged at the blow moulding apparatus (100), **characterized in that** the flow rate value of the blow fluid applied by each of the plurality of blow valves (320) is controlled by a single flow rate controlling valve (310).

9. A blow moulding apparatus (1) according to claim 8, **characterized in that** the blow moulding apparatus (1) further comprises a rotating conveyor device (100) and the plurality of blow moulding devices (101, 102) are mounted on the rotating conveyor device (100), **characterized in that** a control fluid source is located apart from the conveyor device (100) and a rotary unit (110) is arranged at the rotating conveyor device (100) for communicating fluids between a stationary part of the rotary unit (110) and a rotary part of the rotary unit (110), and that the stationary part of the rotary unit (110) is in a first fluid communication with the control fluid source (P1) and that the control ports (313) of the flow rate controlling valves (310) of the blow moulding devices (101, 102) are in fluid communication with the rotary part of the rotary unit (110).

10. A method for expanding a thermoplastic form into a hollow thermoplastic container, comprising
- placing a thermoplastic form (800) in a mould cavity (600);
- injecting a blow fluid from a blow fluid source (P1) into the thermoplastic form (800);
- providing a valve (320) for interrupting the injection of the blow fluid into the thermoplastic form (800);
- providing a fluid-controlled throttle (310) in series to the valve (320);and
- applying a control pressure (p0) to a control port (313) of the fluid-controlled throttle (310) in order to reduce a flow rate value of the blow fluid to a predefined flow rate (Q1) as a function of the control pressure (p0).

## Patentansprüche

1. Blasformvorrichtung (101) zum Expandieren eines thermoplastischen Formmaterialstücks (800) zu einem hohlen thermoplastischen Behälter, wobei die Blasformvorrichtung aufweist:
- mindestens ein Ventil (320), das mit mindestens einer Blasfluidquelle (P1) verbindbar ist, um ein Blasfluid aus der Blasfluidquelle (P1) in das thermoplastische Formmaterialstück (800) zu injizieren,
- eine Flussratesteuerungsdrossel (310), die in Reihe mit dem mindestens einen Ventil (320) verbunden ist, wobei die Flussratesteuerungsdrossel (310) die Flussrate des Blasfluids auf eine vorgegebene Flussrate (Q1) reduziert, wobei die vorgegebene Flussrate (Q1) von einem Steuerdruck (p0) gesteuert wird, der an einem Steueranschluss (313) der Flussratesteuerungsdrossel (310) empfangen wird.

2. Blasformvorrichtung (101) nach Anspruch 1, **dadurch gekennzeichnet, dass** der Steuerdruck (p0) von einem Druckregler (720) erzeugt wird.

3. Blasformvorrichtung (101) nach Anspruch 1 oder 2, **dadurch gekennzeichnet, dass** der Steuerdruck (p0) von einem Proportionalventil erzeugt wird.

4. Blasformvorrichtung (101) nach Anspruch 3, **dadurch gekennzeichnet, dass** das Proportionalventil von einem elektrischen Steuersignal gesteuert wird.

5. Blasformvorrichtung (101) nach Anspruch 4, **dadurch gekennzeichnet, dass** eine Steuerschaltung (270) eine Benutzerschnittstelle bereitstellt, die einem Benutzer erlaubt, einen Flussratewert zu wählen, und dadurch, dass die Steuerschaltung (270) als Antwort auf einen gewählten Flussratewert das elektrische Steuersignal mit einem Wert erzeugt, der dem gewählten Flussratewert entspricht.

6. Blasformvorrichtung (101) nach Anspruch 5, **dadurch gekennzeichnet, dass** die Blasformvorrichtung (101) für die Herstellung mehrerer unterschiedlicher Behälter (8) angepasst ist, und dadurch, dass die Steuerschaltung (270) Speichereinrichtungen (73) aufweist, um einen individuellen Flussratewert für jeden der mehreren unterschiedlichen Behälter (8) zu speichern, die von einer Blasformapparatur (100) hergestellt werden können.

7. Blasformvorrichtung (101) nach einem der Ansprüche 1 bis 6, **dadurch gekennzeichnet, dass** die Blasformvorrichtung (101) ein erstes Ventil (320) zum Vorexpandieren des thermoplastischen Formmaterialstücks (800) bei einem Niederdruckwert (p1) durch Zuführen von Niederdruck-Blasformfluid aus einer Niederdruck-Fluidversorgung (P1) aufweist und ein zweites Ventil (330) zum Blasformen des thermoplastischen Formmaterialstücks (800) in seine endgültige Gestalt durch Zuführen eines Hochdruck-Blasformfluids aus einer Hochdruck-Formfluidversorgung (P2) aufweist, und dadurch, dass das Flussrate-Steuerventil (310) in Reihe mit dem ersten Ventil (320) ist.

8. Blasformapparatur (1) mit mehreren an der Blasformapparatur (100) angeordneten Blasformvorrichtungen (101, 102) nach einem der Ansprüche 1 bis 6, **dadurch gekennzeichnet, dass** der von jedem der mehreren Blasventile (320) angelegte Flussratewert des Blasfluids von einem einzigen Flussrate-Steuerventil (310) gesteuert wird.

9. Blasformapparatur (1) nach Anspruch 8, **dadurch gekennzeichnet, dass** die Blasformapparatur (1) eine rotierende Förderervorrichtung (100) aufweist und die mehreren Blasformvorrichtungen (101, 102) an der rotierenden Förderervorrichtung (100) angeordnet sind, **dadurch gekennzeichnet, dass** die Steuerfluidquelle abseits der Förderervorrichtung (100) angeordnet ist und eine Rotationseinheit (110) an der rotierenden Förderervorrichtung (100) angeordnet ist, um Fluide zwischen einem stationären Teil der Rotationseinheit (110) und einem rotierenden Teil der Rotationseinheit (110) zu kommunizieren, und dadurch, dass der stationäre Teil der Rotationseinheit (110) in einer ersten Fluidkommunikation mit der Steuerfluidquelle (P1) ist, und dadurch, dass die Steueranschlüsse (313) der Flussrate-Steuerventile (310) der Blasformvorrichtungen (101, 102) in Fluidkommunikation mit dem rotierenden Teil der Rotationseinheit (110) sind.

10. Verfahren zum Expandieren eines thermoplastischen Formmaterialstücks zu einem hohlen thermoplastischen Behälter, aufweisend:
- Anordnen eines thermoplastischen Formmaterialstücks (800) in einem Formwerkzeughohlraum (600);
- Injizieren eines Blasfluids aus einer Blasfluidquelle (P1) in das thermoplastische Formmaterialstück (800);
- Bereitstellen eines Ventils (320) zum Unterbrechen der Injektion des Blasfluids in das thermoplastische Formmaterialstück (800);
- Bereitstellen einer fluidgesteuerten Drossel (310) in Reihe mit dem Ventil (320); und
- Anlegen eines Steuerdrucks (p0) an einen Steueranschluss (313) der fluidgesteuerten Drossel (310), um einen Flussratewert des Blasfluids als eine Funktion des Steuerdrucks (p0) auf eine vorgegebene Flussrate (Q1) zu reduzieren.

## Revendications

1. Un dispositif de moulage par soufflage (101) pour l'expansion d'une forme thermoplastique (800) en un récipient thermoplastique creux le dispositif de moulage par soufflage, comprenant
- au moins une vanne (320) connectable à au moins une source de fluide de soufflage (PI) pour injecter un fluide de soufflage provenant de la source de fluide de soufflage (PI) dans la forme thermoplastique (800),
- d'une vanne de régulation du débit (310) reliée en série à au moins une vanne (320), dans laquelle la vanne de régulation du débit (310) réduit le débit du fluide de soufflage à un débit prédéfini (QI), le débit prédéfini (QI) étant commandé par une pression de réglage (PO) qui est reçue au niveau d'un port de commande (313) de la vanne de régulation du débit (310).

2. Un dispositif de moulage par soufflage (101) selon la revendication 1, **caractérisé en ce que** la pression de réglage (PO) est générée par un régulateur de pression (720).

3. Un dispositif de moulage par soufflage (101) selon la revendication 1 ou 2, **caractérisé en ce que** la pression de réglage (PO) est générée par une vanne proportionnelle.

4. Un dispositif de moulage par soufflage (101) selon la revendication 3, **caractérisé en ce que** la vanne proportionnelle est commandée par un signal de commande électrique.

5. Un dispositif de moulage par soufflage (101) selon la revendication 4, **caractérisé en ce qu'**un circuit de commande (270) fournit une interface utilisateur permettant à un utilisateur de sélectionner une valeur de débit et que le circuit de commande (270) en réponse à une valeur de débit sélectionnée génère le signal de commande électrique à une valeur qui correspond à la valeur de débit sélectionnée.

6. Un dispositif de moulage par soufflage (101) selon la revendication 5, **caractérisé en ce que** le dispositif de moulage par soufflage (101) est adapté à la production d'une pluralité de récipients différents (8) et que le circuit de commande (270) comprend des moyens de stockage (73) permettant de stocker une valeur de débit individuelle pour chacun des multiples récipients différents (8) pouvant être produite par un appareil de moulage par soufflage (100).

7. Un dispositif de moulage par soufflage (101) selon l'une quelconque des revendications 1 à 6, **caractérisé en ce que** le dispositif de moulage par soufflage (101) comprend une première vanne (320) permettant de pré-étendre la forme thermoplastique (800) à une valeur basse pression (PI) par alimentation fluide de moulage par soufflage basse pression provenant d'une alimentation en fluide basse pression (PI) et comprenant une seconde vanne (330) pour par soufflage de la forme thermoplastique (800) par soufflage l'amener à sa forme finale par action d'un fluide de soufflage à haute pression provenant d'une zone d'alimentation en fluide de moulage à haute pression (P2) et que la vanne de régulation du débit (310) est en série avec la première vanne (320).

8. Un appareil de moulage par soufflage (1) comprenant une pluralité de dispositifs de moulage par soufflage (101, 102) selon l'une quelconque des revendications 1 à 6, disposés sur l'appareil de moulage par soufflage (100), **caractérisé en ce que** la valeur de débit du fluide de soufflage appliquée par chacune des pluralités de vannes de soufflage (320) est commandée par une seule vanne de régulation de débit (310).

9. Un appareil de moulage par soufflage (1) selon la revendication 8, **caractérisé en ce que** l'appareil de moulage par soufflage (1) comprend en outre un dispositif de convoyeur rotatif (100) et que la pluralité de dispositifs de moulage par soufflage (101, 102) sont montés sur le convoyeur rotatif (100), **caractérisé en ce qu'**une source de fluide de commande est située à l'écart du dispositif de convoyage (100) et qu'une unité rotative (110) est disposée sur le convoyeur rotatif (100) pour établir une communication des fluides entre une partie fixe de l'unité rotative (110) et une partie rotative de l'unité rotative (110), et que la partie fixe de l'unité rotative (110) est dans une première communication fluide avec la source de fluide de commande (PI) et que les ports de commande (313) des vannes de régulation du débit (310) des dispositifs de moulage par soufflage (101, 102) sont en communication fluide avec la partie rotative de l'unité rotative (110).

10. Un procédé d'expansion d'une forme thermoplastique pour produire un récipient thermoplastique creux, comprenant:
- la mise en place d'une forme thermoplastique (800) dans une cavité de moulage (600);
- l'injection d'un fluide de soufflage depuis une source du fluide de soufflage (PI) pour obtenir une forme thermoplastique (800);
- la disposition d'une vanne (320) pour interrompre l'injection du fluide de soufflage sous forme thermoplastique (800);
- la fourniture d'une vanne de régulation du débit (310) en série avec la vanne (320) ; et
- l'application d'une pression de réglage (PO) d'un port de commande (313) de la vanne de régulation du débit (310) afin de réduire une valeur de débit du fluide de soufflage à un débit prédéfini (QI) en tant que fonction de la pression de commande
